# EUROPÄISCHE PATENTSCHRIFT

(11) **EP 3 833 942 B1**
(45) Veröffentlichungstag und Bekanntmachung des Hinweises auf die Patenterteilung: **22.03.2023**
(21) Anmeldenummer: 19748815.8
(22) Anmeldetag: 31.07.2019
(51) Int. Cl.: G01F 1/84, G01N 9/00, G01N 11/16, H01F 5/00

(54) **SPULENVORRICHTUNG EINES SCHWINGUNGSSENSORS ODER SCHWINGUNGSERREGERS UND MESSAUFNEHMER BZW. MESSGERÄT**
COIL ARRANGEMENT FOR A VIBRATION SENSOR OR AN EXCITER, TRANSMITTER AND MEASURING DEVICE
AGENCEMENT DE BOBINE POUR UN CAPTEUR DE VIBRATION OU UN EXCITATEUR, TRANSMETTEUR ET DISPOSITIF DE MESURE

(30) Priorität: 08.08.2018 DE 102018119330
(43) Veröffentlichungstag der Anmeldung: 16.06.2021
(73) Patentinhaber: Endress + Hauser Flowtec AG, 4153 Reinach (CH)
(72) Erfinder: SCHWENTER, Benjamin, 4147 Aesch (CH); HOLLINGER, Claude, 4147 Aesch (CH); WERNER, Marc, 79639 Grenzach-Wyhlen (DE)
(74) Vertreter: Waselikowski, Stefan
(86) Internationale Anmeldenummer: PCT/EP2019/070658
(87) Internationale Veröffentlichungsnummer: WO 2020/030502

(56) Entgegenhaltungen:
- EP-A1- 3 340 289
- DE-A1-102015 120 087
- US-A1- 2011 291 790
- US-A1- 2017 278 619

## Beschreibung

Die Erfindung betrifft eine Spulenvorrichtung eines Schwingungssensors oder Schwingungserregers eines Messaufnehmers oder eines Messgeräts zur Messung einer Dichte oder eines Massedurchflusses eines durch mindestens ein Messrohr des Messaufnehmers bzw. Messgeräts strömenden Mediums, sowie einen solchen Messaufnehmer bzw. ein solches Messgerät.

Die DE102015120087A1 beschreibt ein Messgerät mit einer Spulenvorrichtung, welche zwei Kontaktierungselemente zum Anschließen einer elektronischen Mess-/Betriebsschaltung des Messgeräts mittels elektrischer Leitungen aufweist. Dies hat beispielsweise den Nachteil, dass bei Befestigung der Spulenvorrichtung und abschnittsweiser Führung der elektrischen Leitungen am Messrohr zumindest eine elektrische Leitung schwingfähig über die Spulenvorrichtung zum Kontaktierungselement geführt werden muss. Dadurch ist beispielsweise ein Risiko eines Leitungsbruchs erhöht. Auch können unterschiedliche Leitungslängen unerwünscht sein.

Aufgabe der Erfindung ist es daher, eine Spulenvorrichtung, einen Messaufnehmer und ein Messgerät vorzuschlagen, so dass elektrische Leitungen zum Anschließen der Spulenvorrichtung an eine elektronische Mess-/Betriebsschaltung besser geführt werden können und/oder das Risiko eines Kabelbruchs verringert ist.

Die Aufgabe wird gelöst mit einer Spulenvorrichtung gemäß Anspruch 1, einem Messaufnehmer gemäß Anspruch 9 und einem Messgerät gemäß Anspruch 15.

Eine erfindungsgemäße Spulenvorrichtung eines Schwingungssensors oder Schwingungserregers eines Messaufnehmers oder eines Messgeräts zur Messung einer Dichte oder eines Massedurchflusses eines durch mindestens ein Messrohr des Messaufnehmers bzw. Messgeräts strömenden Mediums umfasst:
Eine Leiterplatte mit mindestens einer Leiterplattenschicht, wobei jede Leiterplattenschicht eine erste Seitenfläche und zur ersten Seitenfläche planparallele zweite Seitenfläche aufweist,
mindestens eine Spule eingerichtet zum Erfassen oder Erzeugen eines zeitlich variierenden Magnetfelds, wobei die Spule zumindest abschnittsweise mittels einer elektrisch leitfähigen Leiterbahn ausgebildet ist, wobei die Spule auf der ersten Seitenfläche und/oder zweiten Seitenfläche einer Leiterplattenschicht angeordnet ist,
wobei die mindestens eine Spule ein erstes Spulenende und ein zweites Spulenende aufweist,
wobei die Spulenvorrichtung vier Kontaktierungselemente aufweist, wobei ein erstes Paar Kontaktierungselemente mit dem ersten Spulenende über einen ersten Anschluss elektrisch verbunden ist, und wobei ein zweites Paar Kontaktierungselemente mit dem zweiten Spulenende über einen zweiten Anschluss elektrisch verbunden ist,
wobei die Leiterplatte eine senkrecht zu den Seitenflächen verlaufende Schnittebene aufweist,
wobei die Schnittebene den Seitenflächen jeweils eine erste Seite und eine zweite Seite zuweist,
wobei jeweils ein Kontaktierungselement eines Paars Kontaktierungselemente auf der ersten Seite angeordnet ist, und wobei jeweils ein Kontaktierungselement eines Paars Kontaktierungselemente auf der zweiten Seite angeordnet ist,
wobei die Spulenvorrichtung mittels jeweils mindestens einem Kontaktierungselement des ersten Paars und des zweiten Paars über elektrische Leitungen an eine elektronische Mess-/Betriebsschaltung des Coriolis-Messgeräts anschließbar ist.

In einer Ausgestaltung weist die Leiterplatte mehrere Leiterplattenschichten auf, welche Leiterplattenschichten gestapelt und über Seitenflächen mit benachbarten Leiterplattenschichten verbunden sind.

In einer Ausgestaltung sind die Kontaktierungselemente entweder auf mindestens einer ersten Seitenfläche oder auf mindestens einer zweiten Seitenfläche angeordnet.

Somit sind alle Kontaktierungselemente von einer Aufsicht aus sichtbar.

In einer Ausgestaltung sind die Kontaktierungselemente bezüglich der Schnittebene symmetrisch angeordnet.

In einer Ausgestaltung weist die Leiterplatte eine Anzahl A_Gesamt Leiterplattenschichten auf, wobei A_Gesamt größer 1 ist,
wobei die Leiterplatte mindestens eine Einbuchtung aufweist, welche Einbuchtung durch mindestens eine Einkerbung einer zugehörigen zusammenhängenden Gruppe von Leiterplattenschichten ausgebildet ist, wobei eine Anzahl der zur zugehörigen Gruppe gehörenden Leiterplattenschichten kleiner als A_Gesamt ist,
wobei ein zu einer Einbuchtung gehörendes Kontaktierungselement auf einer Kontaktierungsleiterplattenschicht angeordnet ist, welche Kontaktierungsleiterplattenschicht an die eine entsprechende Gruppe angrenzt, wobei das Kontaktierungselement einen Boden der Einbuchtung zumindest teilweise ausbildet,
wobei die das Kontaktierungselement tragende Leiterplatte zumindest im Bereich des Kontaktierungselements nicht durch eine benachbarte Leiterplatte bedeckt ist.

Beispielsweise kann die Einbuchtung zumindest teilweise mittels einer elektrisch leitfähigen Masse gefüllt sein, welche dazu eingerichtet ist, eine elektrische Leitung auf dem Kontaktierungselement zu halten und einen elektrischen Kontakt zwischen elektrischer Leitung und Kontaktierungselement zu verbessern.

In einer Ausgestaltung weist eine Mehrzahl Leiterplattenschichten jeweils eine Spule mit jeweils einem ersten Spulenende und jeweils einem zweiten Spulenende auf,
wobei die Spulen seriell und/oder parallel zueinander verschaltet sind,
wobei die Spulen verschiedener Leiterplattenschichten bei Anlegen einer elektrischen Spannung zwischen der ersten Durchkontaktierung und der zweiten Durchkontaktierung konstruktiv interferierende Magnetfelder erzeugen.

Durch Zusammenschalten mehrerer Spulen lässt sich eine Empfindlichkeit der Spulenvorrichtung gegenüber einer Magnetfeldänderung im Bereich der Spulenvorrichtung erhöhen, sowie stärkere Magnetfelder erzeugen.

In einer Ausgestaltung sind die ersten Spulenenden mittels einer ersten Durchkontaktierung verbunden, und wobei die zweiten Spulenenden mittels einer zweiten Durchkontaktierung verbunden sind.

In einer Ausgestaltung sind benachbarte Spulen mittels jeweils einem ihrer Spulenenden verbunden, wobei jeweils ein Ende von äußeren Spulen mit jeweils einem Kontaktierungselement verbunden ist.

Ein erfindungsgemäßer Messaufnehmer eines Messgeräts zum Erfassen eines Massedurchflusses oder einer Dichte eines durch mindestens ein Messrohr des Messaufnehmers strömenden Mediums, umfasst:
das mindestens eine Messrohr mit einem Einlauf und einem Auslauf, welches dazu eingerichtet ist, das Medium zwischen Einlauf und Auslauf zu führen;
mindestens einen Schwingungserreger, welcher dazu eingerichtet ist, das mindestens eine Messrohr zu Schwingungen anzuregen;
mindestens zwei Schwingungssensoren, welche dazu eingerichtet sind, die Auslenkung der Schwingungen mindestens eines Messrohrs zu erfassen;
wobei mindestens ein Schwingungserreger sowie die Schwingungssensoren jeweils eine Spulenvorrichtung mit jeweils mindestens einer Spule, sowie jeweils eine Magnetvorrichtung aufweisen, wobei die Magnetvorrichtung und die Spulenvorrichtung relativ zueinander bewegbar sind,
und wobei die Magnetvorrichtung und die Spulenvorrichtung eines Schwingungserregers bzw. Schwingungssensors mittels magnetischer Felder miteinander wechselwirken,
wobei der Messaufnehmer einen Trägerkörper aufweist, welcher dazu eingerichtet ist, dass Messrohr zu halten,
wobei die Schwingungssensoren des Messaufnehmers jeweils eine erfindungsgemäße Spulenvorrichtung umfassen.

In einer Ausgestaltung sind die Spulenvorrichtungen der Schwingungssensoren am Trägerkörper befestigt sind.

In einer Ausgestaltung teilt eine Querschnittsebene das mindestens eine Messrohr in einen einlaufseitigen Abschnitt und in einen auslaufseitigen Abschnitt auf,
wobei eine einlaufseitige Spulenvorrichtung und eine auslaufseitige Spulenanordnung im Hinblick auf die Kontaktierungselemente spiegelsymmetrisch bezüglich der Querschnittsebene angeordnet sind.

In einer Ausgestaltung weist der Messaufnehmer zwei Sammler auf, wobei ein erster Sammler auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler dazu eingerichtet ist, das aus dem Auslauf des mindestens einen Messrohrs austretende Medium aufzunehmen und in die Rohrleitung zu führen.

In einer Ausgestaltung weist der Messaufnehmer zwei Prozessanschlüsse, insbesondere Flansche auf, welche dazu eingerichtet sind, den Messaufnehmer mit einer Rohrleitung zu verbinden.

In einer Ausgestaltung ist eine Differenz eines elektrischen Gleichspannungswiderstands der Spulenvorrichtungen unterschiedlicher Schwingungssensoren geringer als 3% und insbesondere geringer als 2% und bevorzugt geringer als 1 % eines Mittelwerts der elektrischen Gleichspannungswiderstände der Spulenvorrichtungen ist.

Ein erfindungsgemäßes Messgerät umfasst einen erfindungsgemäßen Messaufnehmer;
eine elektronische Mess-/Betriebsschaltung, wobei die elektronische Mess-/Betriebsschaltung dazu eingerichtet ist, die Schwingungssensoren und den Schwingungserreger zu betreiben, und mittels elektrischer Verbindungen mit diesen verbunden ist,
wobei die mindestens eine elektrische Verbindung mittels einer Kabelführung zur elektronischen Mess-/Betriebsschaltung geführt ist,
wobei die elektronische Mess-/Betriebsschaltung weiter dazu eingerichtet ist, Durchflussmesswerte und/oder Dichtemesswerte zu ermitteln und bereitzustellen,
wobei das Messgerät insbesondere ein Elektronikgehäuse zum Behausen der elektronischen Mess-/Betriebsschaltung aufweist.

Im Folgenden wird die Erfindung anhand von Ausführungsbeispielen beschrieben.
Fig. 1 skizziert ein Messgerät 200 mit einem Messaufnehmer 100.
Fig. 2 skizziert eine erfindungsgemäße Spulenvorrichtung 1.
Fig. 3 skizziert die Anordnung zweier erfindungsgemäßer Spulenvorrichtungen bzgl. eines Messrohrs des Messgeräts bzw. Messaufnehmers.

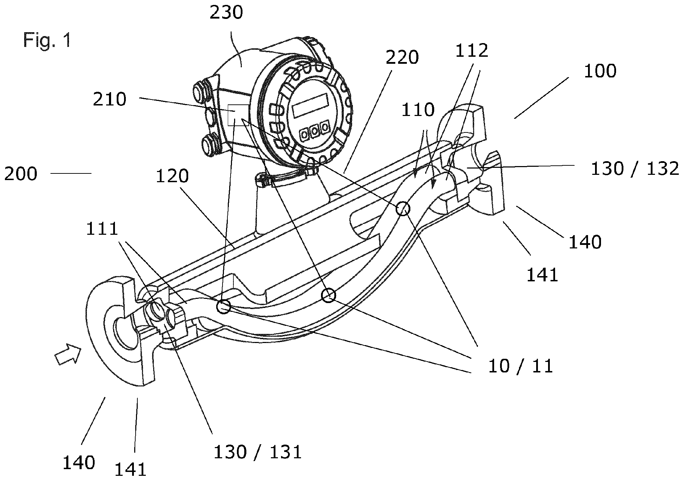

Fig. 1 skizziert ein Messgerät 200 mit einem Messaufnehmer 100, wobei der Messaufnehmer zwei Messrohre 110 aufweist, welche durch einen Trägerkörper 120 des Messaufnehmers gehalten sind. Die Messrohre münden einlaufseitig in einen ersten Sammler 131 und auslaufseitig in einen zweiten Sammler 132, wobei die Sammler 130 dazu eingerichtet sind, ein von einer Rohrleitung (nicht dargestellt) in den Messaufnehmer einströmendes Medium aufzunehmen und gleichmäßig auf die Messrohre zu verteilen. Entsprechend ist der zweite Sammler dazu eingerichtet, das aus den Messrohren herausströmende Medium aufzunehmen und in die Rohrleitung zu überführen. Der Messaufnehmer ist dabei über Prozessanschlüsse 140, insbesondere Flansche an die Rohrleitung angeschlossen. Der Messaufnehmer weist einen Schwingungserreger 11 auf, welcher dazu eingerichtet ist, die Messrohre zum Schwingen anzuregen. Der Messaufnehmer weist zusätzlich zwei Schwingungssensoren 10 auf, welche dazu eingerichtet sind, die Schwingungen der Messrohre zu erfassen. Der Fachmann ist dabei nicht auf die hier genannten Anzahlen von Messrohren, Schwingungserregern und Schwingungssensoren beschränkt. Die hier gezeigte Ausführung ist in diesen Aspekten beispielhaft.

Das Messgerät weist eine elektronische Mess-/Betriebsschaltung 210 auf, welche dazu eingerichtet ist, den Schwingungserreger sowie die Schwingungssensoren zu betreiben, und Massedurchfluss- und/oder Dichtemesswerte des Mediums zu berechnen und auszugeben. Die elektronische Mess-/Betriebsschaltung ist dabei mittels elektrischer Verbindungen 220 mit den Schwingungssensoren sowie dem Schwingungserreger verbunden. Das Messgerät weist ein Elektronikgehäuse 230 auf, in welchem die elektronische Mess-/Betriebsschaltung angeordnet ist. Zur Bestimmung des Massedurchflusses nutzt das Messgerät den Coriolis-Effekt des durch die Messrohre strömenden Mediums, wobei die Strömung die Messrohrschwingungen charakteristisch beeinflusst.

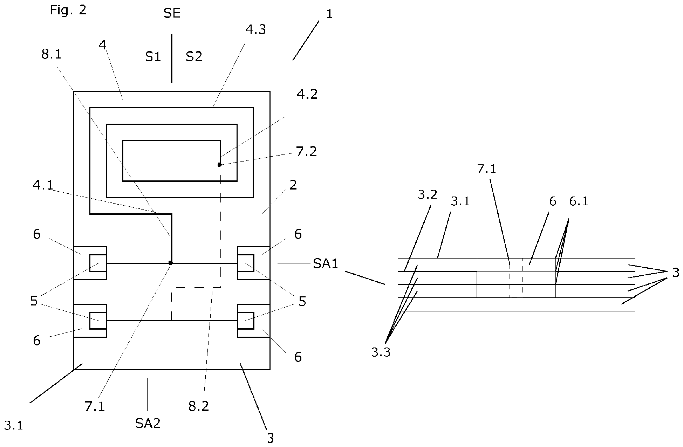

Fig. 2 zeigt eine Aufsicht auf eine erfindungsgemäße Spulenvorrichtung 1 mit einer Leiterplatte 2, welche mehrere Leiterplattenschichten 3 mit jeweils einer ersten Seitenfläche 3.1 und einer zweiten Seitenfläche 3.2 aufweist. Eine Spule 4 mit einem ersten Spulenende 4.1 und einem zweiten Spulenende 4.2 ist in Form einer elektrisch leitfähigen Leiterbahn 4.3 wie hier dargestellt auf eine erste Seitenfläche 3.1 aufgebracht. Die Spulenvorrichtung weist vier Kontaktierungselemente 5 auf, welche ein erstes Paar Kontaktierungselemente 5.1 und ein zweite Paar Kontaktierungselemente 5.2 bilden. Das erste Paar Kontaktierungselemente ist dabei mittels eines ersten Anschlusses 8.1 mit dem ersten Spulenende 4.1 verbunden, und das zweite Paar Kontaktierungselemente ist dabei mittels eines zweiten Anschlusses 8.2 mit dem zweiten Spulenende 4.2 verbunden. Die Kontaktierungselemente eines Paars sind dabei jeweils auf verschiedenen Seiten einer Schnittebene SE, einer ersten Seite S1 und einer zweiten Seite S2 angeordnet, so dass elektrische Verbindungen zur elektronischen Mess-/Betriebsschaltung einseitig, also entweder über die erste Seite oder über die zweite Seite an die Spulenvorrichtung anschließbar sind. Auf diese Art und Weise kann eine Führung der elektrischen Verbindungen sicher eingerichtet werden, so dass Leitungsbrüche und unterschiedliche Kabellängen vermieden werden können.

Wie in Fig. 2 dargestellt, kann eine Leiterplatte 3 mehrere Leiterplattenschichten aufweisen, wobei mehrere Leiterplattenschichten jeweils eine Spule aufweisen. Die Spulen mehrerer Leiterplattenschichten sind dabei über Durchkontaktierungen 7.1, 7.2 verbunden, so dass die Spulen verschiedener Leiterplattenschichten bei Anlegen einer elektrischen Spannung zwischen den Durchkontaktierungen konstruktiv interferierende Magnetfelder erzeugen. Beispielsweise wie hier dargestellt, kann eine erste Durchkontaktierung 7.1 erste Spulenenden 4.1 und eine zweite Durchkontaktierung 7.2 zweite Spulendenden 4.2 verschiedener Spulen miteinander verbinden. Dies entspricht einer Parallelschaltung verschiedener Spulen.

Alternativ können benachbarte Spulen über benachbarte Spulenenden miteinander verbunden sein, wobei ein erstes Spulenende einer äußeren Spule mit dem ersten Anschluss 8.1 verbunden ist, und wobei ein zweites Spulenende einer weiteren äußeren Spule mit dem zweiten Anschluss 8.2 verbunden ist, und wobei benachbarte Spulenenden mittels einer Durchkontaktierung verbunden sind. Dies entspräche einer Serienschaltung verschiedener Spulen.

Die Kontaktierungselemente können in Einbuchtungen 6 angeordnet sein, welche beispielsweise wie hier in der Seitenansicht 1 SA1 gezeigt durch Einkerbungen 6.1 einer zusammenhängenden Gruppe 3.3 von Leiterplatten ausgebildet ist. Die eine Einbuchtung bildende zusammenhängende Gruppe kann bei verschiedenen Kontaktierungselementen verschieden sein. Nicht notwendigerweise alle Kontaktierungselemente sind auf einer Leiterplatte angeordnet. Anstatt einer Einkerbung 6.1 kann eine Leiterplatte auch eine geringere Abmessung wie zumindest eine benachbarte Leiterplatte aufweisen, so dass ein Kontaktierungselement nicht durch die Leiterplatte mit geringeren Abmessungen bedeckt wird.

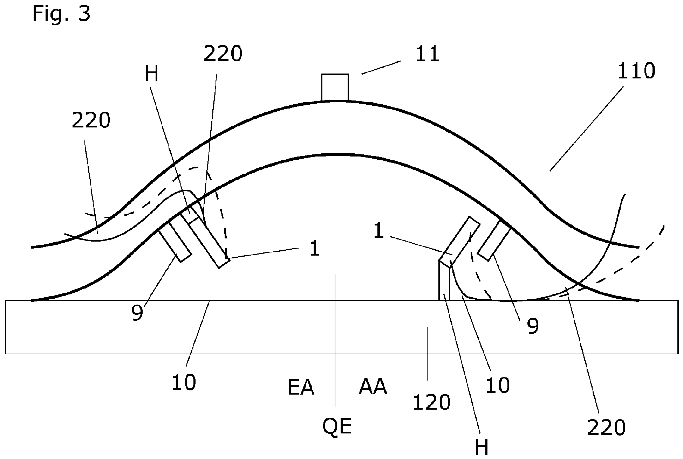

Fig. 3 skizziert eine Seitenansicht auf ein Messrohr 110 eines Messgeräts mit zwei Schwingungssensoren 10 umfassend jeweils eine erfindungsgemäße Spulenvorrichtung 1 aus einer Seitenansicht SA2, siehe Fig. 2, wobei die Schwingungssensoren jeweils mittels einer Halterung H mit dem Messrohr 110 verbunden sind und dazu eingerichtet sind, dessen Schwingungsbewegungen zu folgen, wie im einlaufseitigen Abschnitt EA gezeigt, oder die Spulenvorrichtungen sind mit dem Trägerkörper 120 mittels jeweils einer Halterung H mechanisch verbunden, wie im auslaufseitigen Abschnitt AA gezeigt. Eine Querschnittsebene QE unterteilt das mindestens eine Messrohr in den einlaufseitigen Abschnitt EA sowie denauslaufseitigen Abschnitt AA. Bei am Messrohr angeordneten Spulenvorrichtungen können durch die erfindungsgemäße Anordnung von Kontaktierungselementen elektrische Verbindungen 220 an einer dem Messrohr zugewandten Seite der Spulenvorrichtung angebunden werden. Auf eine wie im Stand der Technik nötige Anbindung einer elektrischen Leitung an einer dem Messrohr abgewandten Seite der Spulenvorrichtung, siehe gestrichelte Linie, kann somit verzichtet werden. Durch das Vermeiden von schwingfähigen Bögen der elektrischen Verbindung wird beispielsweise das Risiko eines Bruchs des Kontakts zwischen elektrischer Verbindung und Kontaktelement vermieden. Magnetvorrichtungen 9, welche wie hier skizziert an einem durch das gezeigte Messrohr verdeckten zweiten Messrohr montiert sind und dazu eingerichtet sind, dessen Schwingungsbewegungen folgen, wechselwirken im Messbetrieb mit den zugehörigen Spulenvorrichtungen über elektromagnetische Felder. Bei entgegengesetzten Messrohrschwingungen sind somit Schwingungen mittels in der Spule induzierte elektrische Spannungen erfassbar.

Falls die Spulenvorrichtungen am Trägerkörper befestigt sind, können die elektrischen Verbindungen entlang des Trägerkörpers geführt werden. In diesem Fall ermöglicht die erfindungsgemäße Anordnung von Kontaktierungselementen gleichlange elektrische Verbindungen und eine gleiche Führung der elektrischen Verbindungen.

Alternativ kann der Messaufnehmer beispielsweise nur ein Messrohr aufweisen, wobei eine Magnetvorrichtung eines jeweiligen Sensors beispielsweise am Messrohrbefestigt ist, und die zugehörige Spulenvorrichtung am Trägerkörper oder umgekehrt, oder auch mehr als zwei Messrohre aufweisen. Der Fachmann wird die Spulenvorrichtungen entsprechend seiner Bedürfnisse einrichten.

Das mindestens eine Messrohr kann wie hier dargestellt zumindest einen Bogen aufweisen oder auch geradlinig verlaufen. Die Anwendbarkeit der Spulenvorrichtung ist unabhängig von einer Messrohrgeometrie.

### Bezugszeichenliste

- 1: Spulenvorrichtung
- 2: Leiterplatte
- 3: Leiterplattenschicht
- 3.1: erste Seitenfläche
- 3.2: zweite Seitenfläche
- 3.3: zusammenhängende Gruppe
- 4: Spule
- 4.1: erstes Spulenende
- 4.2: zweites Spulenende
- 4.3: elektrisch leitfähige Leiterbahn
- 5: Kontaktierungselement
- 5.1: erstes Paar Kontaktierungselemente
- 5.2: zweites Paar Kontaktierungselemente
- 6: Einbuchtung
- 6.1: Einkerbung
- 7.1: erste Durchkontaktierung
- 7.2: zweite Durchkontaktierung
- 8.1: erster Anschluss
- 8.2: zweiter Anschluss
- 9: Magnetvorrichtung
- 10: Schwingungssensor
- 11: Schwingungserreger
- 100: Messaufnehmer
- 110: Messrohr
- 111: Einlauf
- 112: Auslauf
- 120: Trägerkörper
- 130: Sammler
- 131: erster Sammler
- 132: zweiter Sammler
- 140: Prozessanschluss
- 141: Flansch
- 200: Messgerät
- 210: elektronische Mess-Betriebsschaltung
- 220: elektrische Verbindung
- 230: Elektronikgehäuse
- SE: Schnittebene
- S1: erste Seite
- S2: zweite Seite
- QE: Querschnittsebene
- EA: einlaufseitiger Abschnitt
- AA: auslaufseitiger Abschnitt
- H: Halterung

## Patentansprüche

1. Spulenvorrichtung (1) eines Schwingungssensors (10) oder Schwingungserregers (11) eines Messaufnehmers (100) oder eines Messgeräts (200) zur Messung einer Dichte oder eines Massedurchflusses eines durch mindestens ein Messrohr des Messaufnehmers bzw. Messgeräts strömenden Mediums umfassend:
Eine Leiterplatte (2) mit mindestens einer Leiterplattenschicht (3), wobei jede Leiterplattenschicht eine erste Seitenfläche (3.1) und zur ersten Seitenfläche planparallele zweite Seitenfläche (3.2) aufweist,
mindestens eine Spule (4) eingerichtet zum Erfassen oder Erzeugen eines zeitlich variierenden Magnetfelds, wobei die Spule zumindest abschnittsweise mittels einer elektrisch leitfähigen Leiterbahn (4.3) ausgebildet ist, wobei die Spule auf der ersten Seitenfläche und/oder zweiten Seitenfläche einer Leiterplattenschicht angeordnet ist,
wobei die mindestens eine Spule jeweils ein erstes Spulenende (4.1) und jeweils ein zweites Spulenende (4.2) aufweist,
**dadurch gekennzeichnet, dass** die Spulenvorrichtung vier Kontaktierungselemente (5) aufweist,
wobei ein erstes Paar Kontaktierungselemente (5.1) mit einem ersten Spulenende über einen ersten Anschluss elektrisch verbunden ist, und wobei ein zweites Paar Kontaktierungselemente (5.2) mit einem zweiten Spulenende über einen zweiten Anschluss elektrisch verbunden ist,
wobei die Leiterplatte eine senkrecht zu den Seitenflächen verlaufende Schnittebene (SE) aufweist,
wobei die Schnittebene den Seitenflächen jeweils eine erste Seite (S1) und eine zweite Seite (S2) zuweist,
wobei jeweils ein Kontaktierungselement eines Paars Kontaktierungselemente auf der ersten Seite angeordnet ist, und wobei jeweils ein Kontaktierungselement eines Paars Kontaktierungselemente auf der zweiten Seite angeordnet ist,
wobei die Spulenvorrichtung mittels jeweils mindestens einem Kontaktierungselement des ersten Paars und des zweiten Paars an eine elektronische Mess-/Betriebsschaltung (210) des Messgeräts (200) anschließbar ist.

2. Spulenvorrichtung nach Anspruch 1,
wobei die Leiterplatte mehrere Leiterplattenschichten aufweist, welche Leiterplattenschichten gestapelt und über Seitenflächen mit benachbarten Leiterplattenschichten verbunden sind.

3. Spulenvorrichtung nach Anspruch 1 oder 2,
wobei die Kontaktierungselemente entweder auf mindestens einer ersten Seitenfläche oder auf mindestens einer zweiten Seitenfläche angeordnet sind.

4. Spulenvorrichtung nach einem der vorigen Ansprüche,
wobei die Kontaktierungselemente bezüglich der Schnittebene symmetrisch angeordnet sind.

5. Spulenvorrichtung nach einem der Ansprüche 2 bis 4,
wobei die Leiterplatte eine Anzahl A_Gesamt Leiterplattenschichten aufweist, wobei A_Gesamt größer 1 ist,
wobei die Leiterplatte mindestens eine Einbuchtung (6) aufweist, welche Einbuchtung beispielsweise durch mindestens eine Einkerbung (6.1) einer zugehörigen zusammenhängenden Gruppe (3.3) von Leiterplattenschichten ausgebildet ist, wobei eine Anzahl der zur zugehörigen Gruppe gehörenden Leiterplattenschichten kleiner als A_Gesamt ist,
wobei ein zu einer Einbuchtung gehörendes Kontaktierungselement auf einer Kontaktierungsleiterplattenschicht angeordnet ist, welche Kontaktierungsleiterplattenschicht an die eine entsprechende Gruppe angrenzt, wobei das Kontaktierungselement einen Boden der Einbuchtung zumindest teilweise ausbildet,
wobei eine das Kontaktierungselement tragende Leiterplatte zumindest im Bereich des Kontaktierungselements nicht durch eine benachbarte Leiterplatte bedeckt ist.

6. Spulenvorrichtung nach Anspruch 5,
wobei eine Mehrzahl Leiterplattenschichten (3) jeweils eine Spule mit jeweils einem ersten Spulenende und jeweils einem zweiten Spulenende aufweisen,
wobei die Spulen seriell und/oder parallel zueinander verschaltet sind,
wobei die Spulen verschiedener Leiterplattenschichten bei Anlegen einer elektrischen Spannung zwischen einer ersten Durchkontaktierung und einer zweiten Durchkontaktierung konstruktiv interferierende Magnetfelder erzeugen.

7. Spulenvorrichtung nach Anspruch 6,
wobei die ersten Spulenenden mittels einer ersten Durchkontaktierung (7.1) verbunden sind, und wobei die zweiten Spulenenden mittels einer zweiten Durchkontaktierung (7.2) verbunden sind.

8. Spulenvorrichtung nach Anspruch 6,
wobei benachbarte Spulen mittels jeweils einem ihrer Spulenenden verbunden sind, wobei jeweils ein Ende von äußeren Spulen mit jeweils einem Kontaktierungselement verbunden ist.

9. Messaufnehmer (100) eines Messgeräts (200) zum Erfassen eines Massedurchflusses oder einer Dichte eines durch mindestens ein Messrohr (110) des Messaufnehmers strömenden Mediums, umfassend:
das mindestens eine Messrohr mit einem Einlauf (111) und einem Auslauf (112), welches dazu eingerichtet ist, das Medium zwischen Einlauf und Auslauf zu führen;
mindestens einen Schwingungserreger (10), welcher dazu eingerichtet ist, das mindestens eine Messrohr zu Schwingungen anzuregen;
mindestens zwei Schwingungssensoren (11), welche dazu eingerichtet sind, die Auslenkung der Schwingungen mindestens eines Messrohrs zu erfassen;
wobei mindestens ein Schwingungserreger sowie die Schwingungssensoren jeweils eine Spulenvorrichtung mit jeweils mindestens einer Spule, sowie jeweils eine Magnetvorrichtung (8) aufweisen, wobei die Magnetvorrichtung und die Spulenvorrichtung relativ zueinander bewegbar sind,
und wobei die Magnetvorrichtung und die Spulenvorrichtung eines Schwingungserregers bzw. Schwingungssensors dazu eingerichtet sind, mittels magnetischer Felder miteinander zu wechselwirken,
wobei der Messaufnehmer einen Trägerkörper (120) aufweist, welcher dazu eingerichtet ist, dass Messrohr zu halten,
**dadurch gekennzeichnet, dass** die Schwingungssensoren jeweils eine Spulenvorrichtung gemäß einem der Ansprüche 1 bis 8 aufweisen.

10. Messaufnehmer nach Anspruch 9,
wobei die Spulenvorrichtungen (1) der Schwingungssensoren am Trägerkörper befestigt sind.

11. Messaufnehmer nach Anspruch 9 oder 10,
wobei eine Querschnittsebene (QE) das mindestens eine Messrohr in einen einlaufseitigen Abschnitt (EA) und in einen auslaufseitigen Abschnitt (AA) aufteilt,
wobei eine einlaufseitige Spulenvorrichtung und eine auslaufseitige Spulenanordnung im Hinblick auf die Kontaktierungselemente spiegelsymmetrisch bezüglich der Querschnittsebene angeordnet sind.

12. Messaufnehmer nach einem der Ansprüche 9 bis 11,
wobei der Messaufnehmer zwei Sammler (130) aufweist, wobei ein erster Sammler (131) auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler (132) dazu eingerichtet ist, das aus dem Auslauf des mindestens einen Messrohrs austretende Medium aufzunehmen und in die Rohrleitung zu führen.

13. Messaufnehmer nach einem der Ansprüche 9 bis 12,
wobei der Messaufnehmer zwei Prozessanschlüsse (140), insbesondere Flansche (141) aufweist, welche dazu eingerichtet sind, den Messaufnehmer mit einer Rohrleitung zu verbinden.

14. Messaufnehmer nach einem der Ansprüche 9 bis 13,
wobei eine Differenz eines elektrischen Gleichspannungswiderstands der Spulenvorrichtungen unterschiedlicher Schwingungssensoren geringer als 3% und insbesondere geringer als 2% und bevorzugt geringer als 1% eines Mittelwerts der elektrischen Gleichspannungswiderstände der Spulenvorrichtungen ist.

15. Messgerät (200) umfassend:
Einen Messaufnehmer nach einem der Ansprüche 9 bis 14;
eine elektronische Mess-/Betriebsschaltung (210), wobei die elektronische Mess-/Betriebsschaltung dazu eingerichtet ist, die Schwingungssensoren und den Schwingungserreger zu betreiben, und mittels elektrischer Verbindungen mit diesen verbunden ist,
wobei die mindestens eine elektrische Verbindung (220) zur elektronischen Mess-/Betriebsschaltung geführt ist,
wobei die elektronische Mess-/Betriebsschaltung weiter dazu eingerichtet ist, Durchflussmesswerte und/oder Dichtemesswerte zu ermitteln und bereitzustellen,
wobei das Messgerät insbesondere ein Elektronikgehäuse (230) zum Behausen der elektronischen Mess-/Betriebsschaltung aufweist.

## Claims

1. Coil unit (1) of a vibration sensing element (10) or vibration exciter (11) of a sensor (100) or measuring device (200) designed to measure a density or a mass flow of a medium flowing through at least a measuring tube of the sensor or measuring device, said unit comprising:
a printed circuit board (2) with at least a printed circuit board layer (3), wherein each printed circuit board layer has a first side (3.1) and a second side (3.2) that is in a parallel plane to the first side,
at least one coil (4) designed to measure or generate a magnetic field that varies over time, wherein the coil is at least partially formed by means of an electrically conductive conducting path (4.3), wherein the coil is arranged on the first side and/or the second side of a printed circuit board layer,
wherein the at least one coil has a first coil end (4.1) and a second coil end (4.2),
**characterized in that** the coil unit comprises four contact elements (5),
wherein a first pair of contact elements (5.1) is electrically connected to a first coil end via a first connection, and wherein a second pair of contact elements (5.2) is electrically connected to a second coil end via a second connection,
wherein the printed circuit board has a sectional plane (SE) perpendicular to the sides,
wherein the sectional plane respectively assigns the sides a first side (S1) and a second side (S2),
wherein, in each case, a contact element of each pair of contact elements is arranged on the first side and a contact element of each pair of contact elements is arranged on the second side,
wherein the coil unit can be connected to an electronic measuring/operating circuit (210) of the measuring device (200) by means of at least one contact element of the first pair and of the second pair.

2. Coil unit as claimed in Claim 1,
wherein the printed circuit board comprises multiple printed circuit board layers, wherein said printed circuit board layers are stacked and connected to adjacent printed circuit board layers by means of the sides.

3. Coil unit as claimed in Claim 1 or 2,
wherein the contact elements are arranged either on at least a first side or on at least a second side.

4. Coil unit as claimed in one of the previous claims,
wherein the contact elements are symmetrically arranged in relation to the sectional plane.

5. Coil unit as claimed in one of the Claims 2 to 4,
wherein the printed circuit board has a number A_Total printed circuit board layers, wherein A_Total is greater than 1,
wherein the printed circuit board has at least an indentation (6), wherein said indentation is formed for example by at least a notch (6.1) of an associated continuous group (3.3) of printed circuit board layers, wherein a number of the printed circuit board layers belonging to the associated group is less than A_Total,
wherein a contact element pertaining to an indentation is arranged on a contacting printed circuit board layer, wherein said contacting printed circuit board layer is adjacent to a corresponding group, wherein the contact element at least partially forms a base of the indentation,
wherein a printed circuit board carrying the contact element is not covered by a neighboring printed circuit board, at least in the area of the contact element.

6. Coil unit as claimed in Claim 5,
wherein multiple printed circuit board layers (3) have, in each case, a coil with a first coil end and a second coil end,
wherein the coils are connected in series and/or in parallel,
wherein the coils of different printed circuit layers generate magnetic fields that interfere constructively when an electrical voltage is applied between a first through connection and a second through connection.

7. Coil unit as claimed in Claim 6,
wherein the first coil ends are connected by means of a first through connection (7.1), and wherein the second coil ends are connected by means of a second through connection (7.2).

8. Coil unit as claimed in Claim 6,
wherein adjacent coils are respectively connected by means of one of their coil ends, wherein, in each case, one end of exterior coils is connected to a respective contact element.

9. Sensor (100) of a measuring device (200) designed to measure a mass flow or a density of a medium flowing through at least a measuring tube (11) of the sensor, wherein said sensor comprises:
the at least one measuring tube with an inlet (111) and an outlet (112), wherein
said tube is designed to conduct the fluid between the inlet and the outlet,
at least one vibration exciter (10), wherein said exciter is designed to make the at least one measuring tube vibrate;
at least two vibration sensors (11), which are designed to measure the amplitude of the vibrations of at least one measuring tube;
wherein at least one vibration exciter and the vibration sensors each have a coil unit with at least one coil, as well as a magnet unit (8), wherein the magnet unit and the coil unit are mobile in relation to one another,
and wherein the magnet unit and the coil unit of a vibration exciter or of a vibration sensing element are designed to interact with one another by means of magnetic fields,
wherein the sensor has a support body (120), wherein said body is designed to hold the measuring tube,
**characterized in that** the vibration sensors each have a coil unit as claimed in one of the Claims 1 to 8.

10. Sensor as claimed in Claim 9,
wherein the coil units (1) of the vibration sensors are secured on the support body.

11. Sensor as claimed in Claim 9 or 10,
wherein a cross-sectional plane (QE) divides the at least one measuring tube into a section on the inlet side (EA) and a section on the outlet side (AA),
wherein a coil unit on the inlet side and a coil arrangement on the outlet side are arranged in mirror symmetry in relation to the cross-sectional plane with regard to the contact elements.

12. Sensor as claimed in one of the Claims 9 to 11,
wherein the sensor has two collectors (130), wherein a first collector (131) situated on an upstream side of the sensor is designed to receive a medium flowing out of a pipe into the sensor and to conduct it to the inlet of the at least one measuring tube,
wherein a second collector (132) is designed to receive the medium leaving the outlet of the at least one measuring tube and to guide it to the pipe.

13. Sensor as claimed in one of the Claims 9 to 12,
wherein the sensor has two process connections (140), particularly flanges (141), wherein said connections are designed to connect the sensor to a pipe.

14. Sensor as claimed in one of the Claims 9 to 13,
wherein a difference of an electrical DC voltage resistance of the coil units of different vibration sensors is less than 3 % and particularly less than 2 % and preferably less than 1 % of a mean of the electrical DC voltage resistances of the coil units.

15. Measuring device (200) comprising:
a sensor as claimed in one of the Claims 9 to 14;
an electronic measuring/operating circuit (210), wherein the electronic measuring/operating circuit is designed to operate the vibration sensors and the vibration exciter, and is connected to these elements via electrical connections,
wherein the at least one electrical connection (220) is routed to the electronic measuring/operating circuit,
wherein the electronic measuring/operating circuit is further designed to determine and provide flow measured values and/or density measured values,
wherein the measuring device particularly has an electronic housing (230) to accommodate the electronic measuring/operating circuit.

## Revendications

1. Dispositif à bobine (1) d'un capteur de vibrations (10) ou d'un excitateur de vibrations (11) d'un transmetteur (100) ou d'un appareil de mesure (200) destiné à la mesure d'une densité ou d'un débit massique d'un produit s'écoulant à travers au moins un tube de mesure du transmetteur ou de l'appareil de mesure, lequel dispositif comprend :
une carte de circuit imprimé (2) avec au moins une couche de carte de circuit imprimé (3), chaque couche de carte de circuit imprimé présentant une première surface latérale (3.1) et une deuxième surface latérale (3.2) parallèle au plan de la première surface latérale,
au moins une bobine (4) conçue pour mesurer ou générer un champ magnétique variant dans le temps, la bobine étant réalisée au moins par sections au moyen d'une piste de contact (4.3) électriquement conductrice, la bobine étant disposée sur la première surface latérale et/ou la deuxième surface latérale d'une couche de carte de circuit imprimé,
l'au moins une bobine présentant respectivement une première extrémité de bobine (4.1) et respectivement une deuxième extrémité de bobine (4.2),
**caractérisé en ce que** le dispositif à bobine comprend quatre éléments de contact (5),
une première paire d'éléments de contact (5.1) étant reliée électriquement à une première extrémité de bobine par l'intermédiaire d'une première connexion, et une deuxième paire d'éléments de contact (5.2) étant reliée électriquement à une deuxième extrémité de bobine par l'intermédiaire d'une deuxième connexion,
la carte de circuit imprimé présentant un plan de coupe (SE) perpendiculaire aux surfaces latérales,
le plan de coupe attribuant aux surfaces latérales respectivement un premier côté (S1) et un deuxième côté (S2),
un élément de contact de chaque paire d'éléments de contact étant disposé sur le premier côté et un élément de contact de chaque paire d'éléments de contact étant disposé sur le deuxième côté,
le dispositif à bobine pouvant être raccordé à un circuit électronique de mesure/d'exploitation (210) de l'appareil de mesure (200) au moyen respectivement d'au moins un élément de contact de la première paire et de la deuxième paire.

2. Dispositif à bobine selon la revendication 1,
pour lequel la carte de circuit imprimé comprend plusieurs couches de carte de circuit imprimé, lesquelles couches de carte de circuit imprimé sont empilées et reliées par le biais de surfaces latérales à des couches de carte de circuit imprimé adjacentes.

3. Dispositif à bobine selon la revendication 1 ou 2,
pour lequel les éléments de contact sont disposés soit sur au moins une première surface latérale, soit sur au moins une deuxième surface latérale.

4. Dispositif à bobine selon l'une des revendications précédentes,
pour lequel les éléments de contact sont disposés de manière symétrique par rapport au plan de coupe.

5. Dispositif à bobine selon l'une des revendications 2 à 4,
pour lequel la carte de circuit imprimé comprend un nombre A_Total de couches de carte de circuit imprimé, A_Total étant supérieur à 1,
la carte de circuit imprimé comportant au moins une entaille (6), laquelle entaille est formée par exemple par au moins une encoche (6.1) d'un groupe contigu associé (3.3) de couches de carte de circuit imprimé, un nombre de couches de carte de circuit imprimé appartenant au groupe associé étant inférieur à A_Total,
un élément de contact appartenant à une entaille étant disposé sur une couche de carte de circuit imprimé de contact, laquelle couche de carte de circuit imprimé de contact est adjacente à un groupe correspondant, l'élément de contact formant au moins partiellement un fond de l'entaille,
une carte de circuit imprimé portant l'élément de contact n'étant pas recouverte par une carte de circuit imprimé voisine, au moins dans la zone de l'élément de contact.

6. Dispositif à bobine selon la revendication 5,
pour lequel une pluralité de couches de carte de circuit imprimé (3) comportent chacune une bobine présentant chacune une première extrémité de bobine et chacune une deuxième extrémité de bobine,
les bobines étant connectées en série et/ou en parallèle,
les bobines de différentes couches de circuits imprimés générant des champs magnétiques interférant de manière constructive lors de l'application d'une tension électrique entre un premier contact traversant et un deuxième contact traversant.

7. Dispositif à bobine selon la revendication 6,
pour lequel les premières extrémités de bobine sont reliées au moyen d'un premier contact traversant (7.1), et les deuxièmes extrémités de bobine sont reliées au moyen d'un deuxième contact traversant (7.2).

8. Dispositif à bobine selon la revendication 6,
pour lequel des bobines adjacentes sont connectées respectivement au moyen de l'une de leurs extrémités de bobine, une extrémité respective de bobines extérieures étant connectée à un élément de contact respectif.

9. Transmetteur (100) d'un appareil de mesure (200) destiné à la mesure d'un débit massique ou d'une densité d'un produit s'écoulant à travers au moins un tube de mesure (11) du transmetteur, lequel transmetteur comprend :
l'au moins un tube de mesure avec une entrée (111) et une sortie (112), lequel tube est conçu pour guider le fluide entre l'entrée et la sortie,
au moins un excitateur de vibrations (10), lequel excitateur est conçu pour faire vibrer l'au moins un tube de mesure ;
au moins deux capteurs de vibrations (11), lesquels capteurs sont conçus pour mesurer l'amplitude des vibrations d'au moins un tube de mesure ;
au moins un excitateur de vibrations ainsi que les capteurs de vibrations présentant chacun un dispositif à bobine avec au moins une bobine, ainsi qu'un dispositif magnétique (8), le dispositif magnétique et le dispositif à bobine étant mobiles l'un par rapport à l'autre,
et le dispositif magnétique et le dispositif à bobine d'un excitateur de vibrations ou d'un capteur de vibrations étant conçus pour interagir entre eux au moyen de champs magnétiques,
le transmetteur comprenant un corps de support (120), lequel corps est conçu pour supporter le tube de mesure,
**caractérisé en ce que** les capteurs de vibrations comprennent chacun un dispositif à bobine selon l'une des revendications 1 à 8.

10. Transmetteur selon la revendication 9,
pour lequel les dispositifs à bobine (1) des capteurs de vibrations sont fixés au corps de support.

11. Transmetteur selon la revendication 9 ou 10,
pour lequel un plan de section transversale (QE) divise l'au moins un tube de mesure en une section côté entrée (EA) et en une section côté sortie (AA),
un dispositif à bobine côté entrée et un dispositif à bobine côté sortie étant disposés de manière symétrique par rapport au plan de section transversale en ce qui concerne les éléments de contact.

12. Transmetteur selon l'une des revendications 9 à 11,
pour lequel le transmetteur comprend deux collecteurs (130), un premier collecteur (131) situé sur un côté amont du transmetteur étant conçu pour recevoir un produit s'écoulant d'une conduite dans le transmetteur et le guider vers l'entrée de l'au moins un tube de mesure,
un deuxième collecteur (132) étant conçu pour recevoir le produit sortant de la sortie de l'au moins un tube de mesure et le guider dans la conduite.

13. Transmetteur selon l'une des revendications 9 à 12,
pour lequel le transmetteur présente deux raccords process (140), notamment des brides (141), lesquels raccords sont conçus pour relier le transmetteur à une conduite.

14. Transmetteur selon l'une des revendications 9 à 13,
pour lequel une différence d'une résistance électrique en courant continu des dispositifs à bobine de différents capteurs de vibrations est inférieure à 3 % et notamment inférieure à 2 % et de préférence inférieure à 1 % d'une valeur moyenne des résistances électriques en courant continu des dispositifs à bobine.

15. Appareil de mesure (200) comprenant :
un transmetteur selon l'une des revendications 9 à 14 ;
un circuit électronique de mesure/d'exploitation (210), le circuit électronique de mesure/d'exploitation étant conçu pour faire exploiter les capteurs de vibrations et l'excitateur de vibrations, et lequel circuit électronique est raccordé à ceux-ci au moyen de connexions électriques,
l'au moins une connexion électrique (220) étant dirigée vers le circuit électronique de mesure/d'exploitation,
le circuit électronique de mesure/d'exploitation étant en outre conçu pour déterminer et mettre à disposition des valeurs mesurées de débit et/ou des valeurs mesurées de densité,
l'appareil de mesure comprenant notamment un boîtier électronique (230) pour loger le circuit électronique de mesure/d'exploitation.
